**Europäisches Patentamt**

**European Patent Office**

**Office européen des brevets**

(19)

(11) Veröffentlichungsnummer: **0 114 991**
**B1**

(12) **EUROPÄISCHE PATENTSCHRIFT**

(45) Veröffentlichungstag der Patentschrift:
22.07.87

(21) Anmeldenummer: 83112511.7

(22) Anmeldetag: 13.12.83

(51) Int. Cl.⁴: **F 02 M 63/02,** F 02 B 3/04,
F 02 M 41/14

(54) Kraftstoffeinspritzvorrichtung für Brennkraftmaschinen.

(30) Priorität: 31.12.82 DE 3248713

(43) Veröffentlichungstag der Anmeldung:
08.08.84 Patentblatt 84/32

(45) Bekanntmachung des Hinweises auf die Patenterteilung:
22.07.87 Patentblatt 87/30

(84) Benannte Vertragsstaaten:
DE FR GB SE

(56) Entgegenhaltungen:
DE-A-1 919 707
DE-A-2 424 514
DE-A-2 636 659
DE-A-2 922 683
FR-A-2 235 276
FR-A-2 373 688

(73) Patentinhaber: **ROBERT BOSCH GMBH, Postfach
50, D-7000 Stuttgart 1 (DE)**

(72) Erfinder: **Babitzka, Rudolf, Birkenweg 11, D-7141
Kirchberg (DE)**
Erfinder: **Linder, Ernst, Dipl.- Ing., Uhlandstrasse
24, D-7130 Mühlacker (DE)**

LIBER, STOCKHOLM 1987

## Beschreibung

## Stand der Technik

Die Erfindung geht von einer Kraftstoffeinspritzvorrichtung nach der Gattung des Hauptanspruchs aus. Bei einer durch die FR-A-2 235 276 bekannten Kraftstoffeinspritzvorrichtung dieser Art wird der Pumpenarbeitsraum einer Radialkolbenverteilerpumpe turnusmäßig mit den verschiedenen Einspritzleitungen verbunden und ist außerdem über eine Entlastungsleitung entlastbar. Das Öffnen oder Nichtöffnen der Entlastungsleitung bestimmt dabei die Förderphase unter Hochdruck dieser Kraftstoffeinspritzpumpe. Die Steuerung der Entlastung erfolgt über zwei Magnetventile, wobei das eine den Spritzbeginn durch Verschließen der Entlastungsleitung und das andere Magnetventil das Spritzende durch Öffnen der Entlastungsleitung steuert. Bei dieser Kraftstoffeinspritzpumpe wird die Einspritzrate während der Förderphase allein durch die Geometrie des Pumpenkolbens und seines Nockenantriebs bestimmt, so daß in nachteiliger Weise kein Einfluß auf den Einspritzverlauf genommen werden kann und der Kraftstoffmengenbedarf nicht auf den jeweiligen Betriebszustand der Brennkraftmaschine bzw. die vorliegenden Verbrennungsbedingungen abgestimmt werden kann.

Durch die FR-A-2 373 688 ist weiterhin eine Kraftstoffeinspritzpumpe bekannt, die nach dem Prinzip der Reiheneinspritzpumpe arbeitet, also einen hin- und hergehend angetriebenen Pumpenkolben aufweist, versehen mit einer schrägen Steuerkante, über die je nach Drehstellung des Kolbens der Pumpenarbeitsraum früher oder später mit einer Entlastungsleitung während des Pumpenkolbenförderhubs zur Beendigung desselben verbunden wird. Die Besonderheit bei dieser bbekannten Kraftstoffeinspritzpumpe besteht darin, daß zugleich mit der Verdrehung des Pumpenkolbens auch ein Drehschieber bewegt wird, über den der vom Pumpenkolben geförderte Kraftstoff mit entsprechend der Drehstellung unterschiedlicher Verteilung auf zwei Einspritzleitungen verteilt wird, die mit einem einzigen Kraftstoffeinspritzventil verbunden sind. Über dieses als Doppelnadelventil ausgeführte Kraftstoffeinspritzventil wird der vom Pumpenkolben geförderte Kraftstoff in den Brennraum der Brennkraftmaschine eingebracht. Je nach eingestellter Last bzw. eingestellter Kraftstoffeinspritzmenge pro Pumpenkolbenhub kann nun auf diese Weise der Kraftstoff über angepaßte Düsenaustrittsstellen in den Brennraum eingebracht werden, wobei bei kleiner Einspritzmenge einer kleinen Einspritzöffnung der Vorzug gegeben wird, um eine bessere Zerstäubung des eingebrachten Kraftstoffs zu erreichen. Auch hier wird die Einspritzrate allein durch die Geometrie des Pumpenkolbens und seines Antriebs bestimmt und es kann in nachteiliger Weise die Einspritzrate bzw. die relative Länge der Einspritzung nicht beeinflußt werden.

Durch die DE-A-19 19 707 ist eine Radialkolbenverteilereinspritzpumpe bekannt, bei der zwei Pumpsysteme in einer Pumpe verwirklicht sind. Die beiden Pumpsysteme fördern abwechselnd in die aufeinander folgenden Einspritzleitungen, wobei die Kraftstoffeinspritzmenge durch dosiertes Einbringen von Kraftstoff in die Pumpenarbeitsräume mittels Magnetventilen bestimmt wird. Auch bei dieser Kraftstoffeinspritzpumpe wird die Einspritzrate bzw. die relative Einspritzdauer allein durch die Pumpenkolben und deren Nockenantrieb festgelegte Geometrie bestimmt.

Durch die DE-A-2 424 514 ist nun aber ein Einspritzverfahren bekannt, bei dem bei einer fremdgezündeten Brennkraftmaschine die Kraftstoffeinbringung in den Brennraum über ein Kraftstoffeinspritzventil erfolgt, das so gesteuert wird, daß im oberen Lastbereich zur Bildung eines homogenen Gemisches der Kraftstoff ausschließlich in den Saugtakt eingebracht wird und zumindest im unteren Teillastund/oder Leerlaufbereich zur Bildung einer Ladungsschichtung zumindest im wesentlichen kurz vor dem oberen Totpunkt (Zünd-OT) eingespritzt wird. Durch die Verlagerung der Einspritzung in den Ansaugtakt läßt sich bei Vollastbetrieb, wo ein annähernd stöchiometrisches Kraftstoff-Luft-Verhältnis angestrebt wird, eine Homogenisierung des Gemisches erreichen, die Voraussetzung für die Vermeidung örtlicher Überfettungen ist. Diesem Stand der Technik ist jedoch keine konkrete Lösung entnehmbar, wie das dort beschriebene, angestrebte Ziel verwirklicht werden soll. Dabei wird von einem nachteiligen Stand der Technik ausgegangen, der zwei unterschiedliche Kraftstoff-Gemisch-Bildungsanlagen für einen Schichtladungsbetrieb einer Brennkraftmaschine fordert.

## Vorteile der Erfindung

Die erfindungsgemäße Kraftstoffeinspritzvorrichtung mit den kennzeichnenden Merkmalen des Hauptanspruchs weist demgegenüber eine vorteilhafte Vorrichtung zur Durchführung des bekannten Verfahrens auf, wobei ausgehend von einer bekannten Kraftstoffeinspritzpumpe in einfacher Weise gemäß der Ausgestaltung nach Anspruch 1 die Verweildauer des Kraftstoffs der Vollasteinspritzmenge um 180° Drehwinkel gegenüber der der Teillasteinspritzmenge verlängert wird. Damit ergibt sich der Vorteil, daß insbesondere bei hoher Last der Kraftstoff bereits während des Saughubs des Bennkraftmaschinenkolbens in den Brennraum eingebracht wird und sich deshalb bis zum Zündzeitpunkt sehr gut mit der im Brennraum vorhandenen Luft durchmischen kann. Damit wird verhindert, daß im Vollastbetrieb frühzeitig eine Rußemission auftritt, so daß die von der Bauart der Brennkraftmaschine zur Verfügung stehende Leistung optimal bei optimalem Kraftstoffverbrauch ausgenutzt werden kann. Im Teillastbereich hingegen wird der Kraftstoff sehr spät, unmittelbar vor dem Zündzeitpunkt, eingespritzt, so daß sich im Bereich der Zündkerze geschichtet ein zündfähiges Gemisch bilden kann, das dann nach der Entflammung den Rest der Ladung des Brennraumes entflammt. Die Direkteinspritzung vermeidet dabei Nachteile bekannter Einrichtungen, bei denen das sich in Brennraumnischen befindliche Gemisch infolge der Flammablöschung der Brennraumwände nicht entflammen kann und somit zu einer erheblichen Schadstoffemission verbunden mit hohem Kraftstoffverbrauch beiträgt. Mit der direkten Einspritzung ist es möglich, eine ausreichend scharfe Schichtung eines durchbrennfähigen Gemisches zu erzielen, das auch vollständig an der Verbrennung teilnimmt.

Durch die Ausgestaltung gemäß Anspruch 4 ist eine Vorrichtung gegeben, bei der die Verweildauer des Krafstoffes bei Vollastbetrieb noch weiter verlängert werden kann, indem die Kraftstoffeinspritzung bis zum Beginn des Saughubes des Brennkraftmaschinenkolbens vorverlegt werden kann.

## Zeichnung

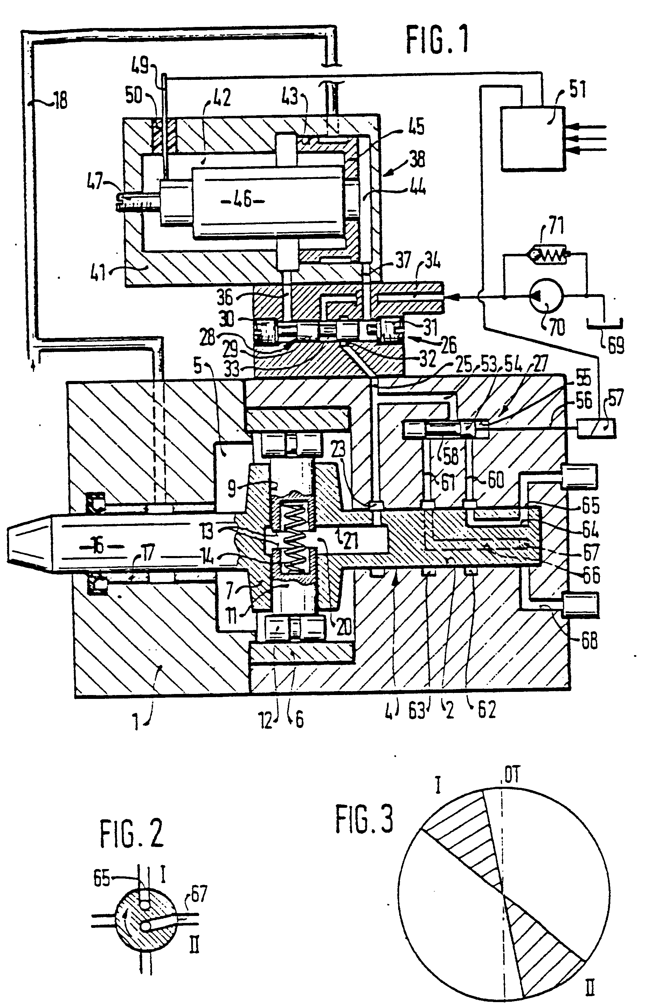

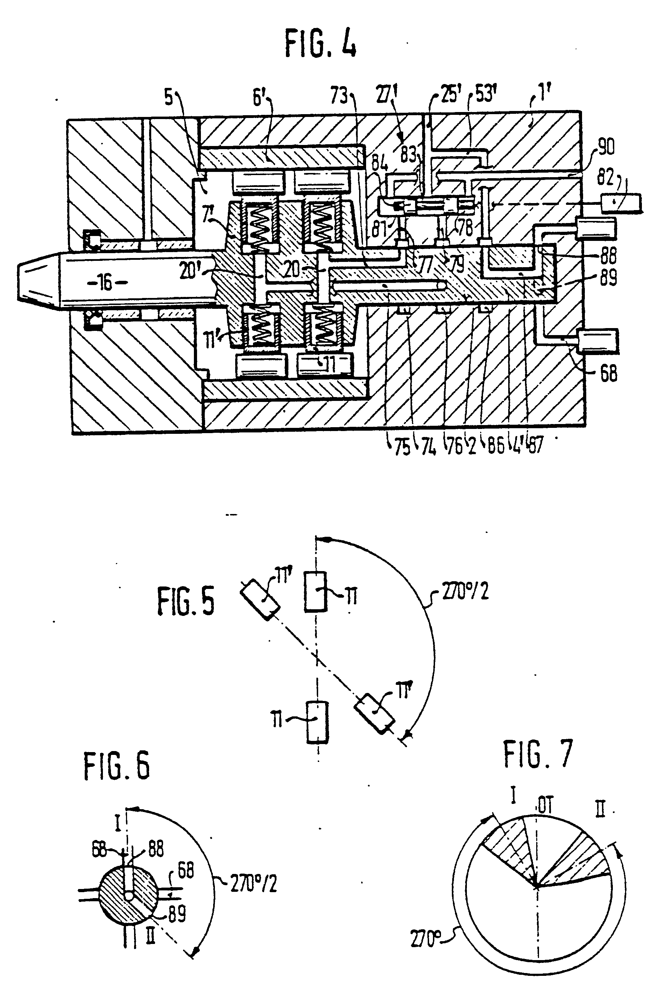

Zwei Ausführungsbeispiele der Erfindung sind in der Zeichnung dargestellt und werden in der nachfolgenden Beschreibung näher erläutert. Es zeigen Figur 1 einen Schnitt durch eine vereinfacht dargestellte Kraftstoffeinspritzpumpe durch die nach den erfindungsgemäße, Verfahren der Kraftstoff eingespritzt werden kann, Figur 2 einen Teilschnitt durch den Verteiler einer Einspritzpumpe nach Figur 1, Figur 3 ein Diagramm über die mit der Kraftstoffeinspritzpumpe erzielten Einspritzzeiten während eines Zyklusses der Brennkraftmaschine, Figur 4 ein zweites Ausführungsbeispiel einer Kraftstoffeinspritzvorrichtung in Form einer Radialkolbenpumpe, Figur 5 die Pumpenkolbenlage der Pumpenkolbenpaare nach Figur 4 bezogen auf den Drehkreis, Figur 6 einen Schnitt durch den Verteiler der Einspritzpumpe nach Figur 4 mit der Drehlage der Verteileröffnungen und Figur 7 ein Diagramm über die Spritzbereiche, die mit Hilfe der Ausgestaltung nach Figur 4 während eines Zyklusses der Brennkraftmaschine eingehalten werden können.

## Beschreibung der Ausführungsbeispiele

In einem ersten Ausführungsbeispiel nach Figur 1 ist in einem Gehäuse 1 ein einseitig geschlossener Zylinder 2 vorgesehen, in dem ein Verteiler 4 einer Radialkolbenverteilerpumpe drehbar gelagert ist. Der Zylinder 2 geht auf der einen Seite in einen zylindrischen Raum 5 über, an dessen radialer Außenwand eine verstellbare Nockenbahn 6 angeordnet ist. Der Verteiler 4 geht innerhalb des Raumes 5 in einen zylindrischen Trägerkörper 7 über, der eine radiale Durchgangsbohrung 9 aufweist, in der zwei Pumpenkolben 11 verschiebbar angeordnet sind. An ihren aus dem Trägerkörper 7 herausragenden Enden der Pumpenkolben weisen diese Rollen 12 auf, die auf der Nockenbahn bei der Drehbewegung des Trägerkörpers 7 abrollen. Auf die Rollen wirkt radial nach außen die Fliehkraft, der auch die Pumpenkolben 11 ausgesetzt sind, sowie die Kraft einer zwischen den inneren Stirnseiten 13 der Pumpenkolben eingespannte Druckfeder 14. Zum Antrieb weist der Trägerkörper 7 bzw. der Verteiler 4 eine Antriebswelle 16 auf, die synchron zur Drehzahl der von der Kraftstoffeinspritzpumpe versorgten Brennkraftmaschine angetrieben wird. Die Antriebswelle 16 ist dabei in einer in das Gehäuse 1 eingesetzten Buchse 17 gelagert, die in ihrer Mitte einen Anschluß zu einer Schmierölleitung 18 hat.

Der von den Pumpenkolben beidseitig in der Durchgangsbohrung 9 eingeschlossene Pumpenarbeitsraum 20 ist mit einer koaxial zum Verteiler 4 verlaufenden Sackbohrung 21 verbunden, an dessen Ende eine Radialbohrung in eine in der Mantelfläche des Zylinders 2 angeordnete erste Ringnut 23 führt. Von dieser zweigt ein Kraftstoffkanal 25 ab, der einerseits zu einem Steuerventil 26 und andererseits zu einem Umschaltventil 27 führt.

Das Steuerventil besteht aus einem Steuerschieber 28, der in einer Bohrung 29 dieht verschiebbar ist zwischen zwei die Enden der Bohrung nach außen verschließenden Gewindebolzen 30 und 31, mit denen der Verschiebeweg des Steuerschiebers 28 eingestellt werden kann. Der Kraftstoffkanal 25 mündet in eine Ringnut 32 in der Mantelfläche der Bohrung 29. Der Steuerschieber 28 weist ferner in seiner Mitte ebenfalls eine Ringnut 33 auf, die ständig mit einer in die Bohrung 29 einmündende Kraftstoffversorgungsleitung 34 verbunden ist. Durch die eine Begrenzungskante der Ringnut 33 wird in der einen Extremlage des Steuerschiebers 28 die Ringnut 32 aufgesteuert und die Verbindung zwischen Kraftstoffkanal 25 und Kraftstoffversorgungsleitung 34 hergestellt. In der anderen Stellung wird die Ringnut 32 vom Steuerschieber 28 völlig verschlossen. Die Stellung des Steuerschiebers erfolgt hydraulisch, indem über eine erste Steuerleitung 36 ein Druckmedium in den Raum zwischen erstem Gewindebolzen und der einen Stirnseite des Steuerschiebers 28 bringbar ist und über eine zweite Steuerleitung 37 Druckmedium in den Raum zwischen zweitem Gewindebolzen 31 und der anderen Stirnseite des Steuerschiebers 28 bringbar ist. Die Druckversorgung der ersten und der zweiten Steuerleitung erfolgt mittels eines piezohydraulischen Treibers 36 derart, wie er in der DE-A-31 35 494 beschrieben ist. Dieser besteht aus einem Gehäuse 41, in dessen Inneren ein zylindrischer Hohlraum 42 eingeschlossen ist. Ein Teil 43 der zylindrischen Wand dieses Hohlraums 42 dient als Führung für einen Kolben 45, der vom zylindrischen Hohlraum 42 einen Druckraum 44 abtrennt. Der Druckraum 44 steht dabei ständig mit der zweiten Steuerleitung 37 in Verbindung und ist vollständig mit hydraulischem Druckmittel gefüllt. In dem zylindrischen Hohlraum 42 ist ein Treiber 46 aus Piezokeramik angeordnet, der als Säule aufgebaut ist und über einen Gewindezapfen 47 mit dem Gehäuse 41 verbunden ist. Am anderen Ende ist der Treiber 46 fest mit dem Kolben 45 verbunden. Auch der zylindrische Hohlraum 42 ist vollständig mit hydraulischer Druckflüssigkeit gefüllt und in ständiger Verbindung mit der ersten Steuerleitung 36. Der elektrische Anschluß des Treibers 46 erfolgt über ein Kabel 49, das durch eine Dichtung 50 aus dem Hohlraum 42 nach außen geführt ist. Das Kabel 49 führt zu einer Steuereinrichtung 51, von wo aus der Treiber 46 mit Spannung beaufschlagt werden kann, was zur Folge hat, daß sich die Volumina in dem zylindrischen Hohlraum 42 und in dem Druckraum 44 komplementär zueinander ändern und zugleich der Steuerschieber 28 hin oder her verschoben wird. Da Längenänderungen bei Spannungsbeaufschlagung einer Piezokeramik äußerst schnell erfolgen, können sehr kurze Schaltzeiten am Steuerventil 26 verwirklicht werden.

Vom Kraftstoffkanal 25 zweigt ein Hauptkraftstofförderkanal 53 ab, der zu dem Umschaltventil 27 führt. Dieses Ventil weist einen Steuerschieber 54 auf, der in einer Bohrung 55 dicht verschiebbar angeordnet ist und über ein Verbindungsglied 56 mit einem Stellmagneten 57 verbunden ist. Der Steuerschieber weist in seinem mittleren Bereich eine Ringnut 58 auf, die ständig mit dem Hauptkraftstofförderkanal 53 verbunden ist. Durch die axialen Begrenzungskanten der Ringnut 58 werden eine erste Kraftstofförderleitung 60 und eine zweite Kraftstofförderleitung 61 gesteuert, derart, daß in der einen Stellung des Steuerschiebers 54 die erste Kraftstofförderleitung 60 mit der Hauptkraftstofförderleitung 53 verbunden ist und in der anderen Stellung des Steuerschiebers 54, wie in der Figur gezeigt, die zweite Kraftstofförderleitung 61 mit der Hauptförderleitung 54 verbunden ist. Die erste Kraftstofförderleitung 60 mündet in eine zweite Ringnut 62 in der Mantelfläche des Zylinders 2 und die zweite Kraftstofförderleitung 61 mündet in eine dritte Ringnut 63 in der Mantelfläche des Zylinders 2.

Mit der zweiten Ringnut 62 ist ständig ein erster Kraftstoffverbindungskanal 64, der innerhalb des Verteilers 4 verläuft und zu einer ersten Verteileröffnung 65 führt, verbunden. Mit der dritten Ringnut 63 ist weiterhin ein zweiter Kraftstoffverbindungskanal 66, der ebenfalls im Verteiler 4 angeordnet ist und der zu einer zweiten Verteileröffnung 67 an der Mantelfläche des Verteilers 4 führt, ständig verbunden. In der Radialebene, in der die erste Verteileröffnung 65 und die zweite Verteileröffnung 67 am Verteiler 4 austreten, führen vom Zylinder 2 Kraftstoffeinspritzleitungen 68, die entsprechend der Zahl und der Aufeinanderfolge der zu versorgenden Zylinder der zugehörigen Brennkraftmaschine am Umfang des Zylinders verteilt angeordnet sind. In Figur 2 ist ein Schnitt in dieser Radialebene dargestellt. Diesem Schnitt kann man entnehmen, daß die zweite Verteileröffnung 67 der ersten Verteileröffnung 65 um 90° voreilt. Dies gilt für die hier dargestellte Ausführungsform einer Kraftstoffeinspritzpumpe zur Versorgung einer Vierzylinderbrennkraftmaschine. In jedem Fall ist die Zuordnung der ersten Verteileröffnung 65 zur zweiten Verteileröffnung 67 jeweils so, daß von beiden Öffnungen zugleich zwei Einspritzleitungen mit Kraftstoff versorgt werden können, wobei die Schaltstellung des Umschaltventils 27 bestimmt, aus welcher der Verteileröffnungen Kraftstoff zur Einspritzung gelangt.

Die Kraftstoffversorgung der Kraftstoffeinspritzpumpe erfolgt aus einem Kraftstoffvorratsbehälter 69, aus dem eine Förderpumpe 70 Kraftstoff in die Kraftstoffversorgungsleitung 34 fördert, wobei der Druck mit Hilfe eines Druckregelventils 71 eingestellt wird.

Die obenbeschriebene Kraftstoffeinspritzpumpe arbeitet folgendermaßen: Mit der Drehung der Antriebswelle 16 werden die Pumpenkolben 11 entsprechend der Ausgestaltung des Nockenrings 6 hin und her bewegt. Während des Saughubs der Pumpenkolben bzw. deren Auswärtsbewegung wird Kraftstoff über den Kraftstoffkanal 25 dem Pumpenarbeitsraum 25 zugeführt. Dazu wird über die Steuereinrichtung 51 der Steuerschieber 28 in seine rechte Anschlagstellung gebracht, so daß eine Verbindung zur Kraftstoffversorgungssleitung 34 hergestellt wird. Zur Durchführung eines Förderhubs werden die Pumpenkolben 11 vom Nockenring nach innen bewegt und bei einem festgelegten Spritzbeginn steuert die Steuereinrichtung 51 den Kraftstoffkanal 25 zu. Die Dauer des Schließens des Steuerventils 26 bestimmt die Kraftstoffeinspritzmenge bzw. die Spritzdauer. Der von den Pumpenkolben 11 geförderte Kraftstoff wird dabei über den Kraftstoffkanal 25, den Hauptkraftstoffkanal 53 und die Ringnut 58 entweder der ersten Kraftstofförderleitung oder der zweiten Kraftstofförderleitung 61 zugeführt. Von dort gelangt der Kraftstoff zu der ersten Verteileröffnung 65 bzw. der zweiten Verteileröffnung 67.

Beim Wiederumschalten des Steuerventils 26 wird der Kraftstoffkanal 25 wieder mit der Kraftstoffversorgungsleitung 34 verbunden, wodurch der restliche von dem Pumpenkolben 11 geförderte Kraftstoff entlastet abströmen kann und die Kraftstoffeinspritzung beendet wird.

Mit der obenbeschriebenen Kraftstoffeinspritzpumpe kann der Zeitpunkt, zu dem in den jeweiligen Zylindern der Kraftstoff zur Einspritzung gelangt, verändert werden. Dieser Zusammenhang ist dem Diagramm in Figur 3 zu entnehmen. In dem mit I bezeichneten Sektor der Kurbelwellendrehstellung bzw. der Brennkraftmaschinenkolbenstellung wird der Kraftstoff über die erste Verteileröffnung 65 im unteren Lastbereich, bei Teillastbetrieb der Brennkraftmaschine, eingespritzt. Dieser Bereich liegt kurz vor dem oberen Totpunkt bzw. unmittelbar vor Zündung des Brennstoff-Luftgemisches im Zylinder der Brennkrafsmaschine. Der genau diagonal gegenüberliegende Bereich II der Drehwinkelstellung der Kurbelwelle bzw. des Brennkraftmaschinenkolbens befindet sich noch im Bereich des Ansaugtaktes des Kolbens zwischen OT und UT. In diesem mit II bezeichneten Bereich wird der Kraftstoff bei Vollastbetrieb der Brennkraftmaschine eingespritzt, und zwar durch die zweite Verteileröffnung 67. Bei Einspritzung der maximalen Kraftstoffmenge entsprechend einem Vollastbetrieb der Brennkraftmaschine hat somit der in den Brennraum der Brennkraftmaschine eingebrachte Kraftstoff wesentlich länger Zeit, sich mit der dort vorhandenen Luft, vor allen Dingen während des Verdichtungshubs des Kolbens, zu vermischen und zu verdampfen. Zum Zündzeitpunkt befindet sich dann ein gut aufbereitetes Kraftstoff-Luftgemisch im Brennraum der Brennkraftmaschine, so daß gewährleistet ist, daß auch die Vollastkraftstoffmenge einwandfrei während des sich anschließenden Arbeitstaktes ohne Rußbildung verbrennt. Die wesentliche geringere im Bereich I in die Nähe der Zündkerze eingebrachte Kraftstoffmenge reicht aus, um bis zur Zündung ein zündfähiges Gemisch in Nähe der Zündkerze zu erhalten. Verteilt auf die gesamte Zylinderfüllung würde bei diesem Brennverfahren, bei dem die Verbrennungsluft den Zylindern der Brennkraftmaschine ungedrosselt zugeführt wird, das entstehende Gemisch für eine Entflammung zu mager.

Mit der erfindungsgemäßen Kraftstoffeinspritzpumpe und nach dem erfindungsgemäßen Verfahren läßt sich eine fremdgezündete Brennkraftmaschine mit Vergaserkraftstoff betreiben in Verbindung mit den Vorteilen, die sich bei einer selbstzündenden Brennkraftmaschine aus der verlustarmen, ungedrosselten Zuführung der Verbrennungsluft in die Brennräume ergeben.

Das Ausführungsbeispiel nach Figur 1 bis 3 bezieht sich auf eine Kraftstoffversorgung einer Vierzylinderbrennkraftmaschine. Natürlich lassen sich auch andere Zylinderzahlen mit einer solchen entsprechend modifizierten Kraftstoffeinspritzpumpe versorgen. Die zweite Verteilerbohrung 67 läuft in einem solchen Fall jeweils um den Winkelabstand der ersten Verteileröffnung 65 vor, den die aufeinander folgenden Einspritzleitungen 68, voneinander haben.

In Figur 4 ist eine zweite Ausführungsform der erfindungsgemäßen Kraftstoffeinspritzpumpe gezeigt. Diese weist im wesentlichen gleiche Bestandteile auf wie die Kraftstoffeinspritzpumpe nach Figur 1. Auch hier ist in einem Gehäuse 1' ein Zylinder 2 vorgesehen, in dem ein Verteiler 4' drehbar gelagert ist. Der in den Raum 5 ragende, sich an dem Verteiler 4' anschließende Trägerkörper 7' weist nun ein erstes Paar Pumpenkolben 11 und ein zweites Paar Pumpenkolben 11' auf, die in zwei verschiedenen Radialebenen angeordnet sind. Wie beim Ausführungsbeispiel nach Figur 1 dient zum Antrieb der Pumpenkolben ein Nockenring 6', der bei einer Drehung des Verteilers bzw. des Trägerkörpers 7' eine Hin- und Herbewegung der Pumpenkolbenpaare erzeugt. Das erste Pumpenkolbenpaar 11 schließt einen ersten Arbeitsraum 20 ein und das zweite Pumpenkolbenpaar 11' einen Arbeitsraum 20' ein. Der erste Arbeitsraum 20 ist wie im Ausführungsbeispiel nach Figur 1 über einen ersten Kraftstofförderkanal 73 im Verteiler 4' mit einer ersten Ringnut 74 in der Mantelfläche des Zylinders 2 ständig verbunden. Der zweite Arbeitsraum 20' ist ebenfalls über einen zweiten Hauptkraftstofförderkanal 75 mit einer zweiten Ringnut 76 in der Mantelfläche des Zylinders 2 verbunden. Von der ersten Ringnut 74 führt eine erste Kraftstoffleitung 77 in einen Zylinder 78 eines Umschaltventils 27' und von der zweiten Ringnut 76 führt eine zweite Kraftstoffleitung 79 ebenfalls in den Zylinder 78. In diesem ist ein Steuerschieber 81 durch einen Elektromagneten 82 verschiebbar angeordnet. Der Steuerschieber weist dabei eine Ringnut 83 auf und hat an seinen beiden stirnseitigen Enden Abstandszapfen 84, durch die er sich in seinem Endstellungen an den Stirnseiten des Zylinders 78 abstützt.

Unabhängig von der Stellung des Steuerschiebers 81 ist die Ringnut 83 ständig mit einem in den Zylinder 78 mündenden Kraftstoffkanal 25' verbunen, der dem Kraftstoffkanal 25 in der Ausgestaltung nach Figur 1 entspricht und dessen Verbindung zu einer hier nicht gezeigten Kraftstoffversorgungsleitung in gleicher Weise gesteuert wird wie bei der Ausgestltung nach Figur 1. Von dem Kraftstoffkanal 25' zweigt ein Hauptkraftstofförderkanal 53' ab, der in eine dritte Ringnut 86 in der Mantelfläche des Zylinders 2 mündet. Mit dieser Ringnut ist ständig ein in diesen Bereich in den Verteiler 4' eintretender Kraftstoffverbindungskanal 87 verbunden, der zu einer ersten Verteileröffnung 88 in der Mantelfläche des Verteilers 4' und zugleich zu einer zweiten Verteileröffnung 89 führt, die in derselben Radialebene liegt wie die erste Verteileröffnung 88. Im Wirkbereich der Verteileröffnungen führen vom Zylinder 2 an dessen Umfang verteilt Kraftstoffeinspritzleitungen 68 ab, die entsprechend Zylinderfolge und Zahl der zu versorgenden Zylinder einer zugehörigen Brenmkraftmaschine vorgesehen sind.

Die Enden des Zylinders 78 sind ständig über eine Kraftstoffentlastungsleitung 90 entlastet, mit der, je nach Stellung des Steuerschiebers 81, die erste Kraftstoffleitung 77 oder die zweite Kraftstoffleitung 79 verbunden ist, wobei gleichzeitig die jeweils andere Kraftstoffleitung mit der Ringnut und damit mit den Hauptkraftstofförderkanal 53' verbunden ist. Das bedeutet, daß jeweils nur eines der Kolbenpaare 11 oder 11' den Kraftstoff wirksam in die Kraftstoffeinspritzleitungen 68 fördern kann und die Stellung des Steuerschiebers 81 bestimmt, welches der beiden Pumpenkolbenpaare jeweils an der Förderung beteiligt ist.

Die in Figur 4 in eine Ebene gezeichneten Pumpenkolbenpaare 11, 11' sind in Wahrheit um 45° gegeneinander versetzt, wie das dem Prinzipbild in Figur 5 entnehmbar ist. Dort sind lediglich die Pumpenkolben bezogen auf ihre Teilung dargestellt. In der gleichen Winkellage wie die Pumpenkolbenpaare zueinanderliegen, liegen auch die Verteileröffnungen 88, 89 zueinander, wie Figur 6 zeigt. Im ausgeführten Beispiel versorgt die Kraftstoffeinspritzpumpe vier Zylinder einer Brennkraftmaschine, wobei die Zylinder im regelmäßigen Abstand zum Einsatz kommen. In der gezeigten Stellung in Figur 6 ist es nur der ersten Verteileröffnung 88 möglich, Kraftstoff in eine der Einspritzleitungen 68 zu fördern. Die andere Verteileröffnung 89 wird durch die Wand des Zylinders 2 verschlossen, solange sie sich in einer Zwischenstellung zwischen zwei vom Zylinder abgehenden Einspritzleitungen 68 befindet.

Das Ausführungsbeispiel nach Figur 4 arbeitet folgendermaßen: Angetrieben durch die Antriebswelle 16 wird der Trägerkörper 7' zusammen mit dem Verteiler 4' in Rotation gebracht. In der gezeigten Stellung des Steuerschiebers 81 ist dabei der Arbeitsraum 20' des zweiten Pumpenkolbenpaars 11' gerade mit dem Kraftstoffkanal 25' verbunden. Über diesen Kanal kann der Pumpenarbeitsraum wie zum Ausführungsbeispiel nach Figur 1 beschrieben mit Kraftstoff versorgt werden. Durch Schaltung des Schaltventils 26 gemäß Figur 1 wird während des Förderhubs des Pumpemkolbenpaares 11' auch Zeitpunkt und Dauer der Einspritzung bestimmt. In der gezeigten Stellung des Steuerschiebers 81 fördert dann das Pumpenkolbenpaar 11' den Kraftstoff über die Hauptkraftstofförderleitung 53' zum Kraftstoffverbindungskanal 87 und von dort über die jeweils freie Verteileröffnung 88 in eine der Kraftstoffeinspritzleitungen 68. Wenn das erste Pumpenkolbenpaar 11 bei derselben Stellung des Steuerschiebers 81 zur Förderung gelangt, so wird der von dem Pumpenkolbenpaar geförderte Kraftstoff über die Entlastungsleitung 90 ausgeschoben. Dieses Pumpenkolbenpaar nimmt somit nicht an der Einspritzung teil. Mit Hilfe des Steuerschiebers wird somit bestimmt, welches Pumpenkolbenpaar gerade zum Einsatz kommt.

Die Pumpenkolbenpaare sind nun einander so zugeordnet, daß ihre Förderhübe in Drehrichtung um 135° auseinanderliegen. Um den gleichen Winkelbetrag weichen auch die Austrittslagen der Verteileröffnungen 88, 89 voneinander ab. Geschaltet wird der Elektromagnet 82 in gleicher Weise in Abhängigkeit von der Last wie beim Ausführungsbeispiel nach Figur 1. Bei niedriger Last, im Teillastbereich wird der Kraftstoff vom ersten Pumpenkolbenpaar 11 im Bereich I von Figur 7 kurz vor dem oberen Totpunkt und unmittelbar vor dem Zündzeitpunkt in den Brennraum eingebracht. Wie beim ersten Ausführungsbeispiel erfolgt dabei die Einbringung in der Nähe der Zündkerze, so daß zum Zündzeitpunkt geschichtet im Brennraum an der Zündkerze ein zündfähiges Gemisch vorliegt, das dann mit Luftüberschuß nach der Entflammung voll durchbrennen kann. Im oberen Lastbereich dagegen, bei Vollastbetrieb wird der Kraftstoff jedoch wesentlich früher, nämlich im Bereich II am Beginn des Saughubs des Brennkraftmaschinenkolbens in den Brennraum eingespritzt. Hierzu wird dann das Pumpenkolbenpaar 11' zum Einsatz gebracht, das dem Pumpenkolbenpaar 11 um 135° Drehwinkel voreilt, das entspricht 270° Kurbelwellenwinkel bei Figur 7. In diesem Fall kommt die zweite Verteileröffnung 89 zum Einsatz, die der ersten Verteileröffnung 68 ebenfalls um den Betrag voreilt. Die erste Verteileröffnung 68 ist dabei durch die Wand des Zylinders verschlossen. Je ein Pumpenkolbenpaar führt während einer einzigen vollständigen Umdrehung der Antriebswelle 16 vier Pump- und vier Saughübe aus entsprechend den vier zu versorgenden Kraftstoffeinspritzleitungen 68. Bei mehreren Zylindern sind die Pumphübe und Saughübe entsprechend mehr. Mit dieser Ausgestaltung lassen sich Voreilungen der Einspritzung der Hauptkraftstoffmenge im Bereich des Saughubes von mehr als nur 180° Kurbelwellenwinkel erreichen. Dabei ist jedoch zu beachten, daß sich nur Vinkel einstellen lassen, bei denen sich während des Förderhubes durch eine der Verteileröffnungen die andere Verteileröffnung gerade in dem Zylinderbereich zwischen den einzelnen Kraftstoffeinspritzleitungen befindet. Dies gilt naturlich für den Fall, wenn man, wie in Figur 4 gezeigt ist mit nur einem einfachen Steuerventil 27' auskommen will, ohne die einzelnen Verteileröffnungen noch gesondert zu steuern. Vorteil dieser Ausführungsform ist es, daß dem bei Vollast eingebrachten Kraftstoff noch mehr Zeit als beim vorbeschriebenen Ausführungsbeispiel gegeben werden kann, sich bis zum Zündzeitpunkt optimal aufzubereiten. Während das Ausführungsbeispiel nach Figur 1 durchaus auch mit einer Hubkolbenverteilereinspritzpumpe verwirklichbar ist, ist es beim Ausführungsbeispiel nach Figur 4 notwendig, eine Radialkolbeneinspritzpumpe zu verwenden, um die sich überschneidenden versetzten Förderhübe verwirklichen zu können.

**Patentansprüche**

1. Kraftstoffeinspritzvorrichtung für Brennkraftmaschinen mit wenigstens einem von wenigstens einem Pumpenkolben (11) in einem Zylinder (9) eingeschlossenen Pumpenarbeitsraum (20), der beim Druckhub des Pumpenkolbens über wenigstens eine Förderleitung (25, 53, 64) mit der Einspritzstelle verbindbar ist, der beim Füllhub des Pumpenkolbens mit einem Kraftstoffversorgungskanal (34) verbindbar ist und der zur Steuerung der Einspritzdauer zu bestimmten Abschnitten des Druckhubs über eine gesteuerte Entlastungsleitung (25, 34) mit einem Entlastungsraum verbindbar ist und mit einem mit Pumpendrehzahl angetriebenen, in einem Zylinder (2) rotierenden Verteiler (4), durch den der vom Pumpenkolben (11) geförderte Kraftstoff nacheinander im Laufe der Drehung des Verteilers Einspritzleitungen (68) zugeführt wird, die entsprechend der Zahl der zu versorgenden Einspritzstellen in gleichen Winkelabständen voneinander am Umfang des Zylinders verteilt angeordnet sind, dadurch gekennzeichnet, daß der Verteiler zwei Verteileröffnungen (65, 67) aufweist, die alternativ über ein in Abhängigkeit von der Last geschaltetes Umschaltventil (27) mit dem wenigstens einen Pumpenarbeitsraum (20) beim Förderhub des diesem zugeordneten wenigstens einem Pumpenkolben verbindbar sind und in Drehrichtung einen Winkelabstand voneinander aufweisen, der gleich dem Winkelabstand von zwei aufeinanderfolgenden Förderhüben ist, bei denen im oberen Lastbereich, bei Vollast die in Drehrichtung vorlaufende Verteileröffnung (67) über das Umschaltventil (27) mit Kraftstoff versorgt wird und jeweils mit einer der Einspritzleitungen verbunden ist und im unteren Lastbereich, bei Teillast die nachlaufende Verteileröffnung (67) über das Umschaltventil (27) mit Kraftstoff versorgt wird und jeweils mit einer der Einspritzleitungen verbunden ist.

2. Kraftstoffeinspritzvorrichtung nach Anspruch 1, dadurch gekennzeichnet, daß ein einziger Pumpenarbeitsraum (20) vorgesehen ist, von dem ein Hauptkraftstofförderkanal (53) zu dem Umschaltventil (27) führt, von dem aus je eine Verbindungsleitung (64, 66) zu je einer Verteileröffnung (65, 67) führt.

3. Kraftstoffeinspritzvorrichtung nach Anspruch 2, dadurch gekennzeichnet, daß die Kraftstoffeinspritzvorrichtung als Radialkolbenverteilerpumpe ausgebildet ist, deren von dem wenigstens einen Pumpenkolben in einer diesen führenden radialen Bohrung (9) eingeschlossener Arbeitsraum (20) ständig mit dem Hauptkraftstofförderkanal (53) verbunden ist.

4. Kraftstoffeinspritzvorrichtung nach Anspruch 1, dadurch gekennzeichnet, daß die Kraftstoffeinspritzvorrichtung als Radialkolbenverteilereinspritzpumpe ausgebildet ist, mit zwei in Richtung der Drehachse in Abstand voneinander liegenden Radialebenen, in denen je wenigstens ein Pumpenkolben (11, 11') angeordnet ist, der jeweils einen Pumpenarbeitsraum (20, 20') begrenzt, von denen der der einen Radialebene zugeordnete Pumpenarbeitsraum (20) mit einer ersten Hauptkraftstofförderleitung (73) und der der anderen Radialebene zugeordnete Pumpenarbeitsraum (20) mit einer zweiten Hauptkraftstofförderleitung (75) verbunden sind, die zu dem Umschaltventil (27') führen, das in der einen Schaltstellung die erste Häuptkraftstofförderleitung zugleich mit beiden Verteileröffnungen (88, 89), von denen nur eine erste beim Förderhub mit einer Einspritzleitung verbindbar ist, und die zweite Hauptkraftstofförderleitung (75) mit einer Entlastungsleitung (90) verbindet und in der anderen Schaltstellung die erste Hauptkraftstofförderleitung (73) mit der Entlastungsleitung (90) und die zweite Hauptkraftstofförderleitung (75) mit beiden Verteileröffnungen (88, 89) verbindet, von denen nur eine zweite beim Förderhub mit einer Einspritzleitung verbindbar ist, und daß die Winkellage des Förderhubs des/der Pumpenkolben(s) der einen Radialebene um einen Drehwinkel von der Förderhubwinkellage des/der Pumpenkolben(s) in der anderen Radialebene abweicht, der kleiner ist als der Winkelabstand zwischen den Förderhüben des/der Pumpenkolben(s) einer der Radialebenen und daß die Verteileröffnungen einen diesem Drehwinkelabstand entsprechenden Winkelabstand voneinander aufweisen.

**Claims**

1. Fuel injection device for internal combustion engines with at least one pump working space (20) which is enclosed by at least one pump plunger (11) in a cylinder (9), can be connected during the delivery stroke of the pump plunger via at least one delivery line (25, 53, 64) to the injection point, can be connected during the filling stroke of the pump plunger to a fuel feed channel (34) and, for controlling the duration of injection at certain sections of the delivery stroke, can be connected via a controlled relief line (25, 34) to a relief space, and with a distributor (4), which is driven at pump speed, rotates in a cylinder (2) and through which the fuel delivered by the pump plunger (11) is successively supplied during the course of rotation of the distributor to injection lines (68), which are arranged distributed at equal angular distances apart around the periphery of the cylinder corresponding to the number of injection points to be fed, characterized in that the distributor has two distributor openings (65, 67), which can be connected alternatively via a change-over valve (27), switched as a function of the load, to the at least one pump working space (20) during the delivery stroke of the at least one pump plunger assigned to the latter, and have in the direction of rotation an angular distance apart which is equal to the angular distance of two successive delivery strokes, during which, in the upper load range, at full load, the distributor opening (67) leading in the direction of rotation is supplied with fuel via the change-over valve (27) and in each case is connected to one of the injection lines and, in the lower load range, at partial load, the trailing distributor opening (65) is supplied with fuel via the change-over valve (27) and in each case is connected to one of the injection lines.

2. Fuel injection device according to Claim 1, characterized in that a single pump working space (20) is provided, from which a main fuel delivery channel (53) leads to the change-over valve (27), from whence leads one connecting line (64, 66) to one distributor opening (65, 67) each.

3. Fuel injection device according to Claim 2, characterized in that the fuel injection device is designed as a radial piston distributor pump whose working space (20), which is enclosed by the at least one pump plunger in a radial bore (9) guiding the latter, is in constant connection with the main fuel delivery channel (53).

4. Fuel injection device according to Claim 1, characterized in that the fuel injection device is designed as a radial piston distributor injection pump, with two radial planes which lie spaced apart in the direction of the axis of rotation and in each of which is arranged at least one pump plunger (11, 11'), which in each case limits a pump working space (20, 20'), of which the pump working space (20) assigned to one radial plane is connected to a first main fuel delivery line (73) and the pump working space (20) assigned to the other radial plane is connected to a second main fuel delivery line (75), which lead to the change-over valve (27'), which in one switch position connects the first main fuel delivery line simultaneously to both distributor openings (88, 89), of which only a first one can be connected to an injection line during the delivery stroke, and connects the second main fuel delivery line (75) to a relief line (90) and, in the other switch position, connects the first main fuel delivery line (73) to the relief line (90) and connects the second main fuel delivery line (75) to both distributor openings (88, 89), of which only a second one can be connected to an injection line during the delivery stroke, and in that the angular position of the delivery stroke of the pump plunger/plungers of the one radial plane deviates from the delivery angular position of the pump plunger/plungers in the other radial plane by an angle of rotation which is smaller than the angular distance between the delivery strokes of the pump plunger/plungers of one of the radial planes, and in that the distributor openings have an angular distance from each other corresponding to this angle of rotation distance.

**Revendications**

1. Dispositif d'injection de carburant pour moteurs à combustion interne avec au moins une chambre de travail de pompe (20) délimitée dans un cylindre (9) par au moins un piston de pompe (11), et qui, lors de la course de refoulement du piston de pompe par l'intermédiaire d'au moins une canalisation de refoulement (25, 53, 64), est susceptible d'être reliée à l'emplacement d'injection, qui pendant la course de remplissage du piston de pompe est susceptible d'être reliée avec le canal d'alimentation en carburant (34), et qui, pour commander la durée d'injection, par rapport à des parties déterminées de la course de refoulement, est susceptible d'être reliée par l'intermédiaire d'une canalisation de purge commandée (25, 34) à un espace de purge, dispositif comportant un répartiteur (4) entraîné à la vitesse de rotation de la pompe et tournant dans un cylindre (2), répartiteur grâce auquel le carburant refoulé par le piston de pompe (11) est amené successivement au cours de la rotation du répartiteur à des canalisations d'injection (68), qui sont réparties à la périphérie du cylindre à des intervalles angulaires identiques de façon correspondante au nombre des emplacements d'injection à alimenter, dispositif d'injection de carburant caractérisé en ce que le répartiteur comporte deux orifices de répartition (65, 67) qui sont susceptibles d'être reliés alternativement, par l'intermédiaire d'une vanne de commutation (27) commutée en fonction de la charge, avec la chambre de travail (20), éventuellement unique, de la pompe, lors de la course de refoulement du piston de pompe associé à cette chambre de travail, et ces orifices comportant dans le sens de la rotation un intervalle angulaire l'un par rapport à l'autre, qui est identique à l'intervalle angulaire entre deux courses de refoulement successives, pour lesquelles, dans la zone surieure de charge, en fonctionnement en pleine charge, l'orifice de répartition (67) précédant l'autre dans le sens de rotation, est alimenté en carburant par l'intermédiaire de la vanne de commutation (27) et est respectivement relié à une des canalisations d'injection, tandis que, dans la zone inférieure de charge, lors du fonctionnement en charge partielle, l'orifice de répartition (65), suivant l'autre, est alimenté en carburant par l'intermédiaire de la vanne de commutation (27) et est respectivement relié à une des canalisations d'injection.

2. Dispositif d'injection de carburant selon la revendication 1, caractérisé en ce qu'il est prévu une unique chambre de travail (20) de la pompe dont part un canal de refoulement principal du carburant (53) aboutissant à la vanne de commutation (27), à partir de laquelle respectivement une canalisation de liaison (64, 66) aboutit respectivement à un orifice de répartition (65, 67).

3. Dispositif d'injection de carburant selon la revendication 2, caractérisé en ce qu'il revêt la forme d'une pompe de répartition à pistons radiaux, dont la chambre de travail (20), délimitée par au moins un piston de pompe dans un perçage radial (9) guidant ce piston, est en communication permanente avec le canal principal de refoulement de carburant (53).

4. Dispositif d'injection de carburant selon la revendication 1, caractérisé en ce qu'il revêt la forme d'une pompe d'injection répartitrice à pistons radiaux, avec deux plans radiaux placés à une certaine distance l'un de l'autre en direction de l'axe de rotation, et dans chacun desquels est disposé au moins un piston de pompe (11, 11') qui délimite respectivement une chambre de travail de pompe (20, 20'), dont la chambre de travail de pompe (20) associée à l'un des plans radiaux, est reliée à une première canalisation principale de refoulement de carburant (73) tandis que la chambre de travail de pompe (20') associée à l'autre plan radial, est reliée à une seconde canalisation principale de refoulement de carburant (75), ces canalisations aboutissant à la vanne de commutation (27'), qui dans une première position de commutation, relie la première canalisation principale de refoulement de carburant simultanément à deux orifices de répartition (88, 89), dont seul le premier est susceptible d'être relié pendant la course de refoulement avec une canalisation d'injection, et relie la deuxième canalisation principale de refoulement de carburant (75) avec une canalisation de purge (90), tandis que, dans son autre position de commutation, il relie la première canalisation principale de refoulement de carburant (73) avec la canalisation de purge (90) et la seconde canalisation principale de refoulement de carburant (75) avec deux orifices de répartition (88, 89) dont seul le second est susceptible d'être relié, pendant la course de refoulement, avec une canalisation d'injection, cependant que la position angulaire de la course de refoulement du piston de pompe ou des pistons de pompe de l'un des plans radiaux, s'écarte de la position angulaire de la course de refoulement du piston de pompe ou des pistons de pompe de l'autre plan radial, d'un angle de rotation qui est plus petit que l'intervalle angulaire entre les courses de refoulement du piston de pompe ou des pistons de pompe de l'un des plans radiaux, et que les orifices de répartition présentent entre eux un intervalle angulaire correspondant à cet intervalle d'angle

de rotation.

0 114 991

FIG.1

FIG.2

FIG.3

# FIG. 4

# FIG. 5

# FIG. 6

# FIG. 7